# EUROPEAN PATENT APPLICATION

(11) **EP 2 066 076 A1**
(43) Date of publication of application: **03.06.2009**
(21) Application number: 07022967.9
(22) Date of filing: 27.11.2007
(51) Int. Cl.: H04L 12/24, H04L 29/08

(54) **Method and device for conveying a message in a P2P network and communication system comprising said device**

(71) Applicant: Nokia Siemens Networks Oy, 02610 Espoo (FI)
(72) Inventor: Greibich, Christian, 2100 Korneuburg (DE); Vizaei, Mohammad, 1220 Wien (AT)
(74) Representative: Bruglachner, Thomas E.

(57) **Abstract**

A method and a device are provided for conveying a message in a P2P network comprising the step of a first network element transmits said message to a second network element, said message comprising or being associated with an action or with a trigger. Said message may comprise an indication to the network element receiving said message that it has to leave the P2P network.

## Description

The invention relates to a method and to a device for conveying a message in a P2P network and to a communication system comprising said device.

A feature or an option of a peer-to-peer network (hereinafter also referred to as P2P network) is the absence of a central component (e.g., a server) that is required for information exchange and/or data exchange between peers of the P2P network.

In particular due to security constraints, a central entity may nevertheless be utilized in the P2P network, e.g., to authenticate a particular peer in order to get connected to the P2P network. Preferably, such central entity is merely used for granting a peer access to the P2P network, after the peer is installed in the P2P network, no further functionality of the central entity may be required.

Although the P2P network bears significant advantages to a provider, e.g., regarding hardware requirements and maintenance demands, the decentralized approach bears a significant disadvantage when a global reset or installing an upgrade becomes due.

The **problem** to be solved is to overcome the disadvantages described before and in particular to provide an efficient mechanism to disconnect in particular a group of peers or clients from a P2P network.

This problem is solved according to the features of the independent claims. Further embodiments result from the depending claims.

In order to overcome this problem, a method is provided for conveying a message in a P2P network comprising the following step:
- a first network element transmits said message to a second network element, said message comprising or being associated with an action or with a trigger.

In particular the first network element and the second network element are peers in a P2P network.

The message may be or comprise any kind of data that is transmitted from the first network element to the second network element. Such data may comprise an instruction for the receiving network element what action to process or it may comprise a trigger for the receiving network element indicating an action to be performed.

Advantageously, said message may be used to inform the second network element (peer), in particular several peers within a P2P network, optionally all such peers, about an action to be processed or executed or it may provide a trigger to initiate a particular processing at the second network element.

The P2P network may in particular be a cluster or a portion of a larger P2P network. Alternatively, the P2P network may be a portion of a network comprising other networks that may at least partially be centrally administered.

The message may be associated with an action for the second network element to leave the network and/or to re-connect at a later time. Also, the first network element may provide a trigger to the second network element that initiates the second network to leave the P2P network and/or to re-connect at a later time.

When the P2P clients are disconnected, a software upgrade to a new version may be conducted. As an alternative, a RESET can be processed after all affected peers have left the P2P network.

In an embodiment, the first network element transmits said message to at least one further network element.

The first network element may in particular transmit the message to at least one of its adjacent network elements, e.g., peers that are associated to the first network element.

In another embodiment, the first network element is authenticated by a central entity, in particular by an authentication server or by a network element comprising an authentication functionality.

Hence, it is a further option that the first network element is entitled to send such message. Such authorization can be provided by a central entity that may be realized as a server, in particular as an authentication server or any entity or network element comprising an authentication functionality.

Advantageously, this approach avoids that any peer within the P2P network is able to malignantly initiate such message, whereas only particular peers (or one destined peer) shall be allowed sending the message, e.g., on request of a provider.

In a further embodiment, the second network element forwards the message to at least one network element that is adjacent to the second network element.

Thus, the second network element may forward the message to its adjacent peers, in particular to those peers the second network element is aware of. Subsequently, the second network element may execute or process the action conveyed by the message or it may use the trigger sent by said message to follow a pre-defined action.

In a next embodiment, each network element is a peer or a client of the P2P network.

It is also an embodiment that the message is distributed among several network elements or peers within the P2P network.

The message may in particular be distributed among all network elements or peers within a (sub-section or portion of the) P2P network.

Pursuant to another embodiment, said message comprises at least one of the following:
- an indication to the network element receiving said message that it has to leave the P2P network;
- an indication to the network element receiving said message that it has to leave the P2P network after a first time interval is lapsed;
- an indication to the network element receiving said message that it has to leave the P2P network until a predefined time;
- an indication to the network element receiving said message that it shall not re-connect for a duration of a second time interval;
- an indication to the network element receiving said message that it shall not re-connect until a given time.

According to an embodiment, the second network element processes an action that is associated and/or triggered by said message.

As yet another embodiment said message is encrypted and/or authenticated.

According to another embodiment, the approach presented herein is utilized for a reset of the P2P ring and/or for an (software) upgrade.

The problem stated above is also solved by a device for conveying a message comprising a processor unit that is equipped and/or arranged such that the method as described herein is executable on said processor unit.

According to an embodiment, the device is a communication device, in particular a network element, a peer or a client in a P2P network.

The problem stated supra is further solved by a communication system comprising the device as described herein.

Said communication system may in particular comprise a P2P network.

Embodiments of the invention are shown and illustrated in the following figures:
- Fig.1: shows a P2P ring comprising network elements or peers (which may also referred to as "clients") P1 to P8;
- Fig.2: shows the P2P ring of Fig.1, wherein a peer P8 initiates a reset by conveying a message to peer P1.

A topology of P2P networks is in particular based on algorithms that set forth a relationship among the peers (also referred to as network elements or clients). Such relationship in particular comprises that a single peer is aware of an identity of n adjacent (or neighboring) peers. Among these peers "keep-alive" messages are exchanged comprising a peer's identity in order to distribute the status of each adjacent peer.

As an option, a new peer may become a member of the P2P network and hence a particular peer gets this new peer as an (additional) adjacent peer. It is also possible that a distinct peer leaves the P2P network; with keep-alive messages missing, its adjacent peers get aware that this peer left the P2P network.

The P2P network may be organized as a ring structure, also referred to as a "P2P ring". A peer of the ring may be aware of its immediate neighbors as well as of additional peers of the ring. The latter connections can be associated with shortcuts in the P2P ring.

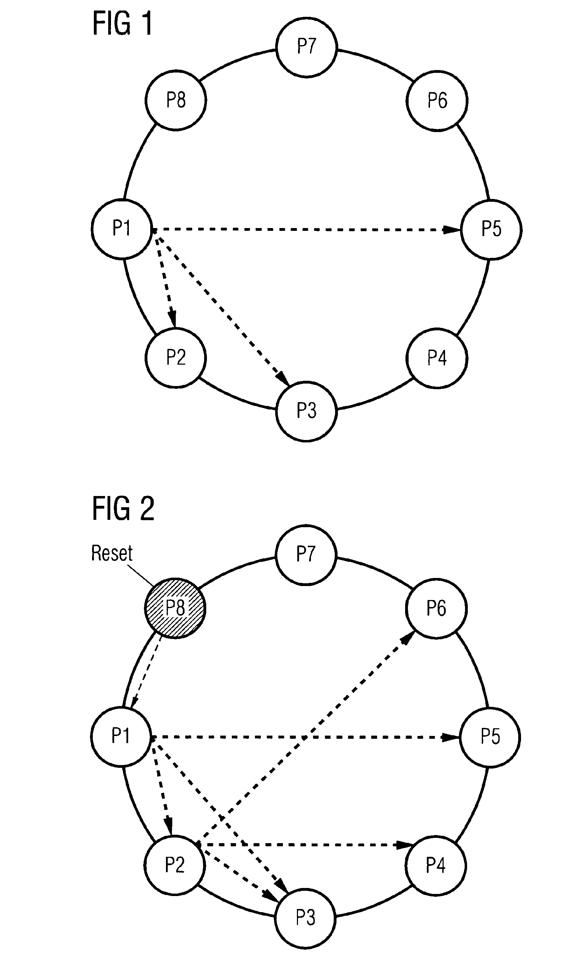

**Fig.1** shows a P2P ring comprising network elements or peers (which may also referred to as "clients") P1 to P8. The peer P1 is connected to its neighbors P2 and P8 and in addition to peer P3 and P5.

As an embodiment, a particular peer that may be supervised by a service provider in order to prevent malpractice, may send a message to its adjacent peers, wherein said message comprises as a command, action or trigger an instruction that the receiving peer has to leave the P2P ring after a first time interval will be lapsed or at a given time.

Preferably, encryption and/or authentication mechanisms are utilized in order to ensure that only authorized peers provide such messages.

Each receiving peer may interpret the message and forward it to its adjacent peer(s).

This allows a fast distribution of the message throughout the P2P network.

According to an example as shown in **Fig.2**, a general reset is initiated by peer P8 conveying a message to peer P1, which distributes the messages to its adjacent peers P2, P3 and P5. Subsequently, peer P1 executes the action conveyed by the message, e.g., it goes offline. The message is further distributed within the P2P network, e.g., by peer P2 forwarding the message received to its adjacent peers P3, P6 and P4. Hence, the message spreads throughout the P2P network, wherein each peer after having informed its adjacent peers, executed the action triggered by said message, e.g., goes offline.

The message may comprise a time when the addressee shall leave the P2P ring and (as an option) another time indicating when the addressee may return to the P2P ring (the addressee may not return before such time is reached).

It is also possible that the message indicates a time period within which the addressee shall leave the P2P ring and another time period it has to wait until it reconnects to said P2P ring.

Another alternative is that the message triggers a substantially immediate reaction at the addressee, i.e. the addressee may leave the P2P ring after receipt of said message. In may be an option that prior to leaving the P2P ring, the addressee forwards the message to at least one adjacent peer (and then disconnects from the P2P ring).

It is an embodiment that a time in the future is chosen for the addressee(s) to disconnect from the P2P ring, said time being conveyed by the message. For example, the message may comprise a definite time when the addressee(s) has/have to leave the P2P ring, e.g., Monday, May 11, at 1:00 UCT. Advantageously, the peers are synchronized for such message format to work properly. Such synchronization may be processed when each peer enters the P2P ring.

A duration or time period to wait until a peer reconnects to the P2P network may be determined to ensure that no peer reconnects before the last peer has left the P2P ring.

Preferably, a peer may reconnect to the P2P ring after the predetermined period of time (waiting period) is over or after a predetermined time, each added by a random time period in order to avoid that all peers try to reconnect at the same time thereby overloading the authentication entity (which has to deal with each peer, one after another).

It is a further advantage to initiate said reset procedure when a minor number of peers is online or currently using a service.

Hence, the approach presented allows the user to conduct an update prior to reconnecting to the P2P ring.

## Claims

1. A method for conveying a message in a P2P network comprising the following step:
- a first network element transmits said message to a second network element, said message comprising or being associated with an action or with a trigger.

2. The method according to claim 1, wherein the first network element transmits said message to at least one further network element.

3. The method according to any of the preceding claims, wherein the first network element is authenticated by a central entity, in particular by an authentication server or by a network element comprising an authentication functionality.

4. The method according to any of the preceding claims, wherein the second network element forwards the message to at least one network element that is adjacent to the second network element.

5. The method according to any of the preceding claims, wherein each network element is a peer or a client of the P2P network.

6. The method according to any of the preceding claims, wherein the message is distributed among several network elements or peers within the P2P network.

7. The method according to any of the preceding claims, wherein said message comprises at least one of the following:
- an indication to the network element receiving said message that it has to leave the P2P network;
- an indication to the network element receiving said message that it has to leave the P2P network after a first time interval is lapsed;
- an indication to the network element receiving said message that it has to leave the P2P network until a predefined time;
- an indication to the network element receiving said message that it shall not re-connect for a duration of a second time interval;
- an indication to the network element receiving said message that it shall not re-connect until a given time.

8. The method according to any of the preceding claims, wherein the second network element processes an action that is associated and/or triggered by said message.

9. The method according to any of the preceding claims, wherein said message is encrypted and/or authenticated.

10. The method according to any of the preceding claims utilized for a reset and/or for an upgrade.

11. A device for conveying a message comprising a processor unit that arranged such that the method according of any of the preceding claims is executable on said processor unit.

12. The device according to claim 11, wherein said device is a communication device, in particular a network element, a peer or a client in a P2P network.

13. Communication system comprising the device according to any of claims 11 to 12.

14. Communication system according to claim 13, comprising a P2P network.
